# EUROPÄISCHE PATENTSCHRIFT

(11) **EP 4 214 728 B1**
(45) Veröffentlichungstag und Bekanntmachung des Hinweises auf die Patenterteilung: **06.05.2026**
(21) Anmeldenummer: 21778424.8
(22) Anmeldetag: 17.09.2021
(51) Int. Cl.: H01G 4/18, H01G 4/30, H01G 4/32, H01G 4/005, H01G 4/232

(54) **KONDENSATOR UND VERFAHREN ZU DESSEN HERSTELLUNG**
CAPACITOR AND METHOD OF MANUFACTURING IT
CONDENSATEUR ET SON PROCÉDÉ DE FABRICATION

(30) Priorität: 21.09.2020 DE 102020124520
(43) Veröffentlichungstag der Anmeldung: 26.07.2023
(73) Patentinhaber: TDK Electronics AG, 81671 München (DE)
(72) Erfinder: SIX, Birgit, 8503 St. Josef (AT); SAX, Stefan, 8054 Graz (AT)
(74) Vertreter: Epping - Hermann - Fischer
(86) Internationale Anmeldenummer: PCT/EP2021/075666
(87) Internationale Veröffentlichungsnummer: WO 2022/058528

(56) Entgegenhaltungen:
- EP-A1- 1 852 879
- EP-A1- 2 284 850
- EP-A1- 2 667 392
- JP-A- 2007 115 723
- JP-A- H02 290 008
- US-A1- 2008 132 673
- US-A1- 2012 091 622

## Beschreibung

Die Erfindung betrifft einen elektrischen Kondensator. Polymerdielektrika finden vielfältige Anwendung in leistungselektronischen Anwendungen, insbesondere in passiven Komponenten wie zum Beispiel in elektrischen Kondensatoren. Als Kondensatordielektrika wurden beispielshalber bereits polyimidhaltige dielektrische Filme vorgeschlagen, wie zum Beispiel Polyetherimide aus US 2007/0258190 A1. Polyamidimide sind bisher vor allem durch ihre Verwendung als temperaturresistente Beschichtungen für Lackdrähte oder ähnlichem bekannt.

Sie wurden für Kondensatoranwendungen bisher in erster Linie im Zusammenhang mit anorganischen Komponenten als dielektrische Schichten vorgeschlagen.

Die japanische Patentanmeldung JP 2000-338667 offenbart, dass Polyamidimid Bestandteil einer Matrix für anorganische Partikel in einem Kondensatordielektrikum sein kann. JP 2007 115723 A offenbart einen Kondensator aufweisend eine dielektrische Schicht, die Polyamidimid enthält und eine erste Elektrode direkt angrenzend an der dielektrischen Schicht angeordnet ist.

US 2010/0259865 A1 offenbart, dass Polyamidimid in einem Kondensator mit einer nicht homogenen dielektrischen Schicht, bestehend aus einem organischen Polymermaterial als eine erste dielektrische Schicht und einem anorganischen Material als eine zweite dielektrische Schicht eingesetzt werden kann.

Jedoch ist bislang keine Verwendung von Polyamidimid als Kondensatormaterial mit herausragender Temperaturstabilität und gleichzeitiger hoher beziehungsweise maßgeschneiderter Permittivität bekannt.

Der Kondensator gemäß der Erfindung wird durch die Merkmale des Anspruchs 1 definiert. Es wird ein Kondensator angegeben, der eine einheitliche dielektrische Schicht aufweist. Hierbei weist die dielektrische Schicht Polyamidimid auf und es ist zumindest eine erste Elektrode direkt angrenzend an der dielektrischen Schicht angeordnet.

Die direkt angrenzende Elektrode kann auf der Schicht aufliegen. Bevorzugt besteht direkter Kontakt auf molekularer Ebene, wie er z. B. mit unten beschriebenen Beschichtungsmethoden erreicht werden kann.

Eine zweite Elektrode ist bevorzugt ebenfalls Teil des Kondensators. Optional bzw. abhängig von den technischen Anforderungen ist es bevorzugt, dass auch die zweite Elektrode direkt angrenzend an der dielektrischen Schicht angeordnet ist. In diesem Fall wird die dielektrische Schicht von der ersten und zweiten Elektrode sandwichartig umschlossen.

Eine einheitliche dielektrische Schicht kann zum Beispiel homogen sein und Polyamidimid enthalten. Homogen kann hier insbesondere bedeuten, dass die dielektrische Schicht frei von Zusätzen ist, welche die Schicht inhomogen machen würden. Insbesondere ist es bevorzugt, wenn keine Micro- oder Nano-Materialien oder zusätzliche andere Feststoffe in der dielektrischen Schicht enthalten sind. Die dielektrische Schicht enthält bevorzugt kein Hybridmaterial. Da Elektroden direkt angrenzend an der einheitlichen dielektrischen Schicht angeordnet sind, befinden sich zum Beispiel auch keine weiteren, sich von der einheitlichen dielektrischen Schicht unterscheidenden Lagen zwischen der einheitlichen dielektrischen Schicht und den Elektroden.

Eine einheitliche Polyamidimid aufweisende dielektrische Schicht bringt gegenüber anderen polymerbasierten dielektrischen Schichten den Vorteil mit sich, dass sie eine Temperaturstabilität bis zu fast 300°C aufweist. Zudem kann eine polyamidimidhaltige dielektrische Schicht eine hohe Permittivität über einen breiten Inputfrequenzbereich aufweisen. Dabei wird bevorzugt auch eine hohe Durchbruchspannung aufrechterhalten.

Somit können mit Polyamidimid als polymeres Material für dielektrische Schichten in Kondensatoranwendungen gegenläufige Anforderungen nach hoher Temperaturstabilität bei gleichzeitigen maßgeschneiderten beziehungsweise stabilen dielektrischen Eigenschaften erfüllen.

So kann ein einheitliches Dielektrikum aufweisend Polyamidimid biaxial orientiertes Polypropylen (BOPP) ersetzen, welches eines der meistverwendeten Materiale für Kondensatordielektrika ist. Dies kann von Vorteil sein, da BOPP mit einer üblichen Gebrauchstemperatur von maximal 105°C und einer niedrigen Permittivität im Bereich von 2,2 in Bezug auf aktuelle Entwicklungen an seine Leistungsgrenzen angelangt ist, insbesondere bezüglich Temperaturstabilität bei gleichzeitiger Einhaltung elektrischer beziehungsweise elektronischer Parameter.

So kann eine erfindungsgemäße Polyamidimid aufweisende dielektrische Schicht eine bis zu 150°C höhere Temperaturstabilität aufweisen. Darüber hinaus kann eine beinahe doppelt so hohe Permittivität als für BOPP auch bei erhöhten Temperaturen erreicht werden.

Somit können Anforderungen sogar an zukünftige Anwendungen, zum Beispiel in der Luft- und Raumfahrttechnik erfüllt werden, wobei Betriebstemperaturen von über 150°C möglicherweise von über 200°C erreicht werden könnten.

Nach einer bevorzugten Ausführung des Kondensators besteht die dielektrische Schicht zu zumindest 50 gew% aus Polyamidimid.

Ein solcher hoher Polyamidimidanteil in der einheitlichen dielektrischen Schicht kann gewährleisten, dass sich die hervorragenden dielektrischen Eigenschaften des Polyamidimid gegenüber anderen möglichen optionalen Komponenten durchsetzen.

Bevorzugt weist die dielektrische Schicht einen Gewichtsanteil an Polyamidimid von 90 % oder mehr auf, noch bevorzugter besteht die dielektrische Schicht ausschließlich aus Polyamidimid.

Die Erfinder haben erkannt, dass Polyamidimid chemisch gut funktionalisierbar ist. Es kann daher in seinen Eigenschaften flexibel z.B. ausschließlich mit organischen Komponenten auf die hervorragenden elektrischen oder elektronischen Eigenschaften hin maßgeschneidert werden, welche gemäß einer Anwendung zu erfüllen sind. Daher ist der Kondensator bevorzugt so gefertigt, dass die dielektrische Schicht, welche bevorzugt eine einheitliche dielektrische Schicht ist, frei von festen zusätzlichen Materialien, wie anorganischen Materialien ist. Die dielektrische Schicht ist bevorzugt kein Hybridmaterial.

Eine von anorganischen Materialien freie dielektrische Schicht kann einfacher zu fertigen sein als eine Mischschicht aus einen anorganisch-organischen Hybridmaterial.

Bevorzugt weist die dielektrische Schicht des Kondensators Polyamidimid-Hauptketten auf, welche die Amid- und die ImidGruppe des Polyamidimids umfasst.

Dies bedeutet, dass insbesondere die Hauptketten des Polyamidimidpolymers ausschließlich über Amid beziehungsweise Imid-Bindungen gebildet werden. Dies schließt nicht aus, dass weitere chemische Funktionen an beziehungsweise in den Hauptketten angebracht sein können.

Polyamidimid-Verbindungen beziehungsweise die enthaltenen chemische Bindungen sind hochtemperaturstabil was ein Vorteil für dielektrische Schichten ist, welche unter Hochtemperaturbedingungen eingesetzt werden.

Als weiterer bevorzugter Aspekt können die Polyamidimid-Hauptketten, welche in der dielektrischen Schicht enthalten sind chemisch miteinander quer vernetzt sein, das heißt sie können Quervernetzungen aufweisen.

Durch eine maßgeschneiderte Zahl an Quervernetzungen können die mechanischen, aber auch elektronischen Eigenschaften des Polyamidimids aber auch insbesondere die Temperatureigenschaften gezielt eingestellt werden.

Grundsätzlich umfasst der Begriff "Quervernetzung" im Sinne der Anmeldung jede Art von kovalenter chemischer Verbindung, die zwischen Polyamidimid-Hauptketten oder zwischen verschiedenen Punkten einer Polyamidimid-Hauptkette besteht. Die Quervernetzungen sind chemische Bindungen, die zusätzlich zu den chemischen Bindungen zwischen den Wiederholeinheiten der Polyamidimid-Hauptkette ausgebildet sind. Bevorzugt wird hierbei die Zahl an Quervernetzungen so gewählt, dass sich ein thermoplastisches Polyamidimid bildet.

Bevorzugt umfassen die Quervernetzungen lineare Verknüpfungen, welche eine endständige Einheit einer Polyamidimid-Hauptkette mit einer endständigen Einheit einer anderen Polyamidimid-Hauptkette verbindet, wodurch eine Kettenverbindung in Reihe entsteht. Bevorzugt weicht die lineare Verknüpfung zwischen den Hauptketten von dem Verbindungstyp innerhalb der Polyamidimid-Hauptkette ab. Die Quervernetzung weist bevorzugt also kein Amidimid-Motiv auf. Jedoch kann die Quervernetzung eine Amid- oder eine Imidbindung sein. Eine solche Bindung kann dabei das Wiederholmotiv des sich in der Polyamidimid-Hauptkette wiederholenden Polyamidimid-Motivs durchbrechen. Es können mehrere Polyamidimid-Hauptketten in Reihe linear verknüpft sein.

Die Zahl der Quervernetzungen kann über die Tempertemperatur gesteuert werden. Je höher diese ist, umso mehr Polyamidimid-Hauptketten werden miteinander in Reihe verknüpft. Somit werden die Polymerketten mit zunehmender Tempertemperatur länger. Dadurch kann die mechanische Stabilität der dielektrischen Schicht gesteigert werden. Weiterhin kann der Verlustfaktor verringert werden. Diese Art der Steuerung des Grades der Quervernetzung über die Temperatur ist insbesondere für lineare Verknüpfungen bevorzugt.

Bevorzugt werden chemische Quervernetzungen über Urethanbrücken gebildet.

Urethanbrücken können bevorzugt über Isocyanatgruppen, welche sich an der Hauptkette befinden, ausgebildet werden, welche zusammen mit einer Hydroxygruppe an einer anderen Hauptkette reagieren, um eine Urethanbindung zu bilden.

Im Ausgangsmaterial können auch Lactame als funktionale Gruppen vorliegen, da diese als Schutzgruppe dienen um eine Reaktion zwischen einer Isocyanatgruppe und einer Hydroxygruppe zu steuern. Ein solches Lactam kann zum Beispiel durch Temperatureinwirkung geöffnet werden, wobei sich eine Isocyanatgruppe ausbildet, welche dann ihrerseits mit einer Hydroxygruppe, zum Beispiel einer anderen Hauptkette, reagiert. Das heißt, in einem Ausgangsmaterial können Isocyanatgruppen oder/und Lactam funktionelle Gruppen vorliegen. Bevorzugt liegen im Ausgangsmaterial jedoch ausschließlich Lactame vor, da so eine längere Haltbarkeit bei Raumtemperatur erreicht werden kann. Zudem kann so auch die anwendbare Tropfzeit während der Fertigung der dielektrischen Schicht verlängert werden.

Alternativ oder zusätzlich zu anderen Quervernetzungen wie Urethanbrücken können bevorzugt Imidbrücken zwischen Polyamidimid-Hauptketten ausgebildet sein.

Imidbrücken können zum Beispiel über die Reaktion einer Anhydrid-Gruppe mit einer geeigneten Gruppe, wie zum Beispiel einem Amin, an einer anderen Polyamidimid-Hauptkette zu einem Imid reagieren, um zwischen zwei Polyamidimid-Hauptketten eine Imidbrücke als Quervernetzung auszubilden. Bevorzugt ist die Anhydrid-Gruppe eine Phthalsäureanhydrid-Gruppe. Durch eine solche Reaktion kann auch eine Verknüpfung zwischen verschiedenen Punkten einer Polyamidimid-Hauptkette ausgebildet werden.

Sowohl Urethanbrücken als auch Imidbrücken eignen sich besonders gut für die technisch einfache Ausbildung einer linearen Verknüpfung. Zudem kann der Grad der linearen Verknüpfung mit diesen Gruppen besonders präzise mittels der Steuerung der Temper-Temperatur eingestellt werden.

Weiterhin kann eine Quervernetzung auch über eine Ureabrücke ausgebildet sein. Diese kann unter Beteiligung von AminGruppen an der Polyamidimid-Hauptkette gebildet werden. Es ist besonders bevorzugt, wenn durch diese eine dreidimensionale Vernetzung gebildet ist, d. h., dass mittels dieses Bindungsmotivs nicht ausschließlich lineare Verknüpfungen ausgebildet sind. Noch bevorzugter können über Ureabrücken nur solche Quervernetzung ausgebildet sein, die nicht lineare Verknüpfungen sind. Insbesondere bevorzugt können diese neben den linearen Verknüpfungen vorliegen. Z.B. kann ein sowohl über Ureabrücken dreidimensional als auch über Imid- oder Urethanbrücken linear vernetztes Polymermaterial für die Dielektrikumsschicht gebildet sein bzw. werden.

Grundsätzlich können Urethanbrücken zusätzlich zu den Imidbrücken vorliegen. Es ist jedoch bevorzugt, dass nur ein lineares Verknüpfungsmotiv vorliegt, da dies die Prozessführung erleichtert.

Ein Beispiel für ein geeignetes Ausgangsmaterial ist zum Beispiel im Handel erhältliches RESISTHERN^{®} AI 336 L.

Als ein Beispiel für ein solches Ausgangsmaterial können Polyamidimid-Harzlösungen dienen, welche unter anderem auch zur Isolationsbeschichtung von Drähten oder Elektroden eingesetzt werden können. Ein Beispiel für eine solche Polyamidimid-Harzlösung ist zum Beispiel im Handel erhältliches RESISTHERN^{®} AI 336 L.

Als weiteren bevorzugten Aspekt der einheitlichen dielektrischen Schicht des Kondensators kann die dielektrische Schicht so ausgebildet sein, dass die Polyamidimid-Hauptketten partiell aromatisch sind.

Partiell aromatische Polyamidimid-Hauptketten tragen insbesondere zu einem ausgewogenen Verhältnis von Flexibilität und Temperaturstabilität bei. So können vollständig aromatische Polyamidimid-Hauptketten zu starr sein. Jedoch durch partielle Aromatizität, das heißt zum Beispiel Aromatizität an der Imidkomponente, kann die nötige Temperaturstabilität bei gleichzeitiger Flexibilität erhalten werden.

Gemäß einem bevorzugten Aspekt kann das Polyamidimid Phenylengruppen und/oder Furangruppen als funktionelle Gruppen aufweisen.

Das Einbringen von Phenylengruppen zum Beispiel in der Polyamidimid-Hauptkette kann für den Erhalt der nötigen Flexibilität der Hauptkette relevant sein. So werden je nach Wahl durch eine oder mehrere verschiedene Phenylengruppen in der Hauptkette die Länge der Wiederholeinheit und deren Flexibilität angepasst. So können zum Beispiel Biphenyl, Di- und Triphenylmethan, Ortho- und Paradibenzylbenzol oder Tribenzylbenzol als mögliche Phenylengruppen eingesetzt werden. Grundsätzlich können in einer Polyamidimid-Hauptkette auch mehrere verschiedene dieser oder anderer Phenylengruppen vorhanden sein. Das heißt, es ist möglich, dass verschiedene Phenylengruppen in einer Polyamidimid-Hauptkette vorkommen. Häufig ist in einer Hauptkette jedoch nur ein Typ an Phenylengruppe vorhanden.

Da Furane selbst eine hohe Polarität besitzen, kann durch die Wahl verschiedener Furane die Polarität der dielektrischen Schicht eingestellt werden. Beispielsweise werden hierfür Benzofurane, Dibenzofurane, Furanone oder Hydroxyfuranone verwendet. Beispielsweise können die Hydroxyfuranone oder andere Furanderivate eine oder mehrere Hydroxygruppen aufweisen, welche zur Quervernetzung über Isocyanatgruppen, welche beispielsweise aus Lactamgruppen gebildet werden können als Reaktionspartner zur Ausbildung einer Urethanbrücke benötigt werden.

Gemäß einem weiteren bevorzugten Aspekt kann das Polyamidimid eine Struktur gemäß der chemischen Formel 1 aufweisen, wobei hier R¹ eine unreagierte Gruppe, wie ein Lactam, ein Anyhdrid oder ein Amin oder eine Urethanbrücke bzw. eine Imidbrücke ist. Bevorzugt ist R¹ eine Urethanbrücke bzw. eine Imidbrücke. R² kann hier eine Phenylengruppe sein und R³ ein Furan. Alternativ kann R³ auch eine Urethanbrücke bzw. eine Imidbrücke sein. In diesem Fall ist die Polyamidimid-Hauptkette mit zwei weiteren Polyamidimid-Hauptketten an beiden Enden verknüpft.

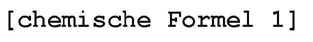

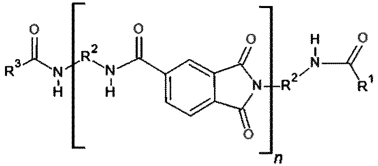

Grundsätzlich sind Lactame, wie oben schon bereits beschrieben, bevorzugte Gruppen, die zum Beispiel endständig als R¹ in einer Polymerkette in einem Ausgangsmaterial angebracht sind. Über die aus dem Lactam gebildeten Isocyanatgruppen, können grundsätzlich Brücken, zum Beispiel in Form von Urethanbrücke, zu einer anderen Polyamidimid-Hauptkette gebildet werden. Das Lactam kann beispielsweise ein β, γ, δ oder ε Lactam sein. Bevorzugt von diesen sind insbesondere δ und ε Lactame.

Urethanbrücken können aus im Ausgangsmaterial endständigen Lactamen und endständigen Furanen mit Hydroxygruppen gebildet werden, wodurch Hauptketten in Reihe verbunden werden, und so verlängert werden. Durch diese Reaktion können die Hauptketten so vernetzt werden dass die gebildete Polyamidimid Schicht thermoplastische Eigenschaften aufweist. Dabei wird die Zahl an Quervernetzungen so eingestellt, dass die dielektrische Schicht des Kondensators nicht zu starr und spröde wird.

Wie oben erläutert, können linear verknüpfende Imidbrücken über ein Anhydrid, wie zum Beispiel ein Phthalsäureanhydrid gebildet werden, welches mit einem Amin reagiert. Alternativ kann eine Isocyanatgruppe mit der Anhydridgruppe zu einem Imid reagieren, wobei CO₂ abgespalten wird.

Im Ausgansstoff, also vor Herstellung der Quervernetzungen einschließlich der linearen Verknüpfungen, befinden sich die für die entsprechenden Verknüpfungen geeigneten funktionellen Gruppen in der R³ bzw. R¹ Position in der chemischen Formel 1.

In einer bevorzugten Ausführungsform des Kondensators ist eine Vielzahl erster Elektrodenschichten alternierend mit zweiten Elektrodenschichten gestapelt. Zwischen je zwei benachbarten Elektrodenschichten ist eine dielektrische Schicht angeordnet.

Das heißt, der Kondensator kann ein Vielschichtkondensator sein.

Alternativ kann ein Vielschicht-Kondensator z. B. aus einem Wickel geschnitten werden. In diesem Fall kann eine leitende bzw. bevorzugt metallische strukturierte Schicht als Elektrode verwendet werden, welche mindestens zwei elektrisch getrennte Bereiche aufweist, die somit als Kondensatorelektroden dienen.

Nach einem weiteren bevorzugten Aspekt können alle ersten Elektrodenschichten mit einem ersten Außenkontakt elektrisch leitend verbunden sein und alle zweiten Elektrodenschichten mit einem zweiten Außenkontakt elektrisch leitend verbunden sein.

Die Außenkontaktierungen können über Flammspritzen, PVD-Prozesse oder andere Methoden aufgebracht werden.

Ein Vielschichtkondensator mit entsprechenden Außenkontakten erlaubt Einsatz in diversen technischen Anwendungen.

Gemäß einer weiteren Ausführungsform kann ein Substrat an einer Seitenfläche des Kondensators, welche parallel zur Ebene der Elektrodenschichten liegt, angeordnet sein.

Wie oben beschrieben kann ein solches Substrat leitend sein, also auch Elektrodenfunktionen erfüllen, es kann aber auch isolierend wirken und nach dem Fabrikationsprozess am Bauteil verbleiben.

Insbesondere kann ein Kondensator, wie er zuvor beschrieben wurde, ein Surface Mounted Device (SMD) sein.

Weiterhin kann der Kondensator, wie er zuvor beschrieben wurde, auch ein Durchsteckkondensator sein, das heißt er weist Drähte zur Durchsteckmontage auf. Mit diesen Drähten kann der Kondensator sowohl elektrisch leitend aber auch mechanisch an externen Kontaktstellen angebracht werden. Bei dem Kondensator kann es sich auch um einen Wickelkondensator handeln. Insbesondere in diesem Fall kann der Kondensator nur eine einzige Metallisierung als Elektrode aufweisen, die direkt an der dielektrischen Schicht anliegt. Auch ein Aufbau mit zwei direkt an der dielektrischen Schicht anliegenden Elektroden ist möglich.

Als weiterer Aspekt der Erfindung gemäß Anspruch 20 wird ein Verfahren zur Herstellung eines Kondensators, umfassend die Herstellung einer einheitlichen dielektrischen Schicht, angegeben. Die dielektrische Schicht wird durch Aufbringen einer Prepolymer-Polyamidimidlösung auf einer Depositionsfläche, anschließendes Trocknen der Prepolymer-Polyamidimidlösung auf der Depositionsfläche und Tempern der getrockneten Prepolymer-Polyamidimidlösung hergestellt.

Die Depositionsfläche kann die Oberfläche einer Elektrode oder einer Elektrodenschicht sein. Die Depositionsfläche kann auch eine Oberfläche eines Substrats sein. Das Substrat kann das Substrat des fertigen Kondensators sein, oder auch nur ein Zwischenträger, von dem der aufgebrachte und gegebenenfalls quervernetzte Polyamidimidfilm wieder abgelöst wird.

Durch dieses Verfahren kann ein zuvor beschriebener Kondensator hergestellt werden.

So kann auch eine einheitliche dielektrische Schicht hergestellt werden. Die Prepolymer-Polyamidimidlösung kann insbesondere eine Lösung eines Harzes, welches auch als Isolierbeschichtung geeignet ist, zum Beispiel in einem organischen Solvent gelöstes RESISTHERN^{®} AI 336 L sein.

Polyamidimide sind grundsätzlich in einer Vielzahl von Lösungsmitteln löslich und können in einer Vielzahl von Konzentrationen aufgebracht werden, um geschlossene Schichten oder Filme zu bilden. Somit eignen sie sich für den flexiblen Einsatz von verschiedensten Depositionsmethoden oder verschiedener Schichtdicken, wie unten genauer ausgeführt wird.

Beim Trocknen der Prepolymer-Polyamidimidlösung kann das Lösungsmittel größtenteils oder vollständig entfernt werden.

Beim Tempern der getrockneten Prepolymer-Polyamidimidlösung verdichtet sich das Material und die Quervernetzung, zum Beispiel über Lactame kann in der so gebildeten Schicht einsetzen.

Die Geschwindigkeit der Quervernetzungsreaktion kann über die Temper-Temperatur bestimmt werden.

Bevorzugt wird der Grad an Quervernetzung durch die Zahl an Linkergruppen (z.B. Über die durch als Lactame geschützten Isocyantgruppen) an den Polyamidimid-Hauptketten in der Prepolymer-Polyamidimidlösung bestimmt, und die Temper-Temperatur wird so gewählt dass alle Linkergruppen Quervernetzungen ausbilden.

In einem bevorzugten Fall sind Linkergruppen endständig an den Polyamidimid-Hauptketten angeordnet. Grundsätzlich, aber insbesondere in diesem Fall, kann über die Temper-Temperatur der Grad an Quervernetzungen beeinflusst bzw. eingestellt werden. Je höher die Temper-Temperatur gewählt wird, desto mehr Quervernetzungen werden in einer vorgegebenen Zeit ausgebildet. Dadurch können mehr Polyamidimid-Hauptketten miteinander verknüpft werden.

Als ein weiterer Aspekt kann das Verfahren, wie zuvor beschrieben, so modifiziert werden, dass die Depositionsfläche eine Oberfläche eines Substrats ist, die dielektrische Schicht nach deren Herstellung von der Depositionsfläche gelöst wird, um eine dielektrische Folie zu erzeugen, die dielektrische Folie metallisiert wird und schließlich die metallisierte dielektrische Folie gewickelt wird.

Somit kann das zuvor beschriebene Verfahren zur Herstellung eines Wickelkondensators verwendet werden. Dies hat den Vorteil, dass die so gebildete dielektrische Schicht oder Folie, die durch Metallisieren mit den ersten und zweiten Elektroden versehen wird, auch vor der Metallisierung noch bearbeitet werden kann. Beispielshalber können Methoden wie Folienziehen oder Ähnliches angewandt werden, um die Materialeigenschaften zu optimieren.

Gemäß einem weiteren Aspekt kann die Herstellung eines Kondensators die folgenden Punkte umfassen: Es wird ein elektrisch leitendes Substrat verwendet oder alternativ ein Substrat auf dessen Oberfläche eine erste Elektrodenschicht erzeugt wird. Die Depositionsfläche kann somit die Oberfläche des elektrisch leitfähigen Substrats oder einer ersten Elektrodenschicht sein. Nach dem Aufbringen der dielektrischen Schicht auf die Depositionsfläche kann eine zweite Elektrodenschicht auf der dielektrischen Schicht hergestellt werden und es kann eine weitere dielektrische Schicht auf dieser zweiten Elektrodenschicht hergestellt werden, indem die Prepolymer-Polyamidimidlösung auf die zweite Elektrodenschicht aufgebracht wird, diese getrocknet wird und anschließend getempert wird.

Im Falle eines elektrisch leitenden Substrats kann dieses Substrat als Elektrode dienen, zum Beispiel als erste Elektrode. Oberhalb dieser kann eine zweite Elektrodenschicht aufgebracht wird. In diesem Fall kann natürlich auf der zweiten Elektrodenschicht wieder eine weitere dielektrische Schicht und dann anschließend eine erste Elektrodenschicht aufgebracht werden um einen Vielschichtkondensator zu erhalten.

Alternativ dazu kann wie beschrieben das Substrat zum Beispiel nichtleitend, das heißt elektrisch isolierend sein. Dabei wird zuerst eine Elektrodenschicht aufgebracht, bevor weitere Schichten oberhalb des Substrats aufgebracht oder angeordnet werden. In beiden Fällen handelt es sich um ein Verfahren zum Aufbau eines gestapelten Vielschichtkondensators aus Lösung, im Gegensatz zu einem Wickelkondensator oder einem Vielschichtkondensator, der aus einem Wickel geschnitten wird

Bevorzugt für das zuvor beschriebene Verfahren ist, wenn die Prepolymer-Polyamidimidlösung Polyamidimid-Hauptketten enthalten, an welchen Isocyanatgruppen oder/und noch bevorzugter als Lactam-Gruppen geschützte Isocyanatgruppen an den Polyamidimid-Hauptketten angeordnet sind.

Diese haben die oben beschriebenen Vorteile.

Bevorzugt kann das Verfahren so durchgeführt werden, dass die Prepolymer-Polyamidimidlösung durch Rakeln, Rotationsbeschichten (Spin-Coaten), Düsenbeschichtung (Slot Die Coaten) oder Sprühbeschichtung (Spray-Coaten) aufgebracht werden.

Im Folgenden wird die Erfindung näher an beispielhaften Ausführungen beschrieben. Diese beispielhaften Ausführungen sind in den folgenden Figuren dargestellt, welche nicht maßstabsgetreu sind. Längen sowie relative und absolute Dimensionen können somit aus den Figuren nicht entnommen werden. Die Erfindung ist auch nicht auf die folgenden Darstellungen beschränkt.
Figur 1 zeigt ein erstes Ausführungsbeispiel eines Kondensators im schematischen Querschnitt.
Figur 2a zeigt den Masseverlust einer Polyamidimidschicht in einer thermogravimetrischen Analyse. Figur 2b zeigt den Verlauf des Verlustfaktors eines Kondensators.
Figur 3 zeigt einen ersten Vielschichtkondensator als zweites Ausführungsbeispiel eines Kondensators im schematischen Querschnitt.
Figur 4 zeigt einen zweiten Vielschichtkondensator als drittes Ausführungsbeispiel eines Kondensators im schematischen Querschnitt.
Figur 5 zeigt einen dritten Vielschichtkondensator als viertes Ausführungsbeispiel eines Kondensators im schematischen Querschnitt.
Figur 6 zeigt einen zur Durchsteckmontage geeigneten Vielschichtkondensator als fünftes Ausführungsbeispiel eines Kondensators im schematischen Querschnitt.
Figur 7 zeigt einen Wickelkondensator als sechstes Ausführungsbeispiel eines Kondensators im schematischen Querschnitt.

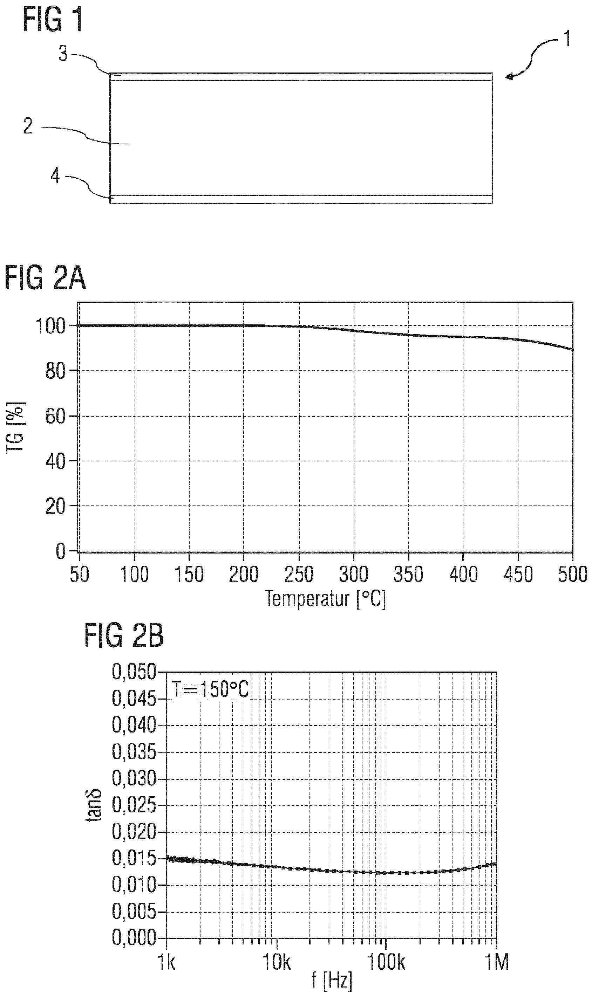

Figur 1 zeigt ein erstes Ausführungsbeispiel eines Kondensators 1 im schematischen Querschnitt. Der Kondensator 1 weist eine organische dielektrische Schicht 2 auf. Die dielektrische Schicht 2 ist eine einheitliche Schicht. Das bedeutet, sie besteht aus einem einzigen Material und enthält keine voneinander separierbaren Volumenbereiche. Sie ist somit auch kein Kompositmaterial. Die dielektrische Schicht 2 besteht zu mindestens 50 gew% aus einem Polyamidimid. Bevorzugt ist der Polyamidimidanteil höher, zum Beispiel über 90%. Noch bevorzugter besteht die dielektrische Schicht 2 ausschließlich aus Polyamidimid.

Das Polyamidimid kann ein beliebiges Polyamidimid sein, insbesondere kann es ein partiell aromatisches Polyamidimid sein. Besonders bevorzugt ist ein Polyamidimid gemäß der Strukturformel 1.

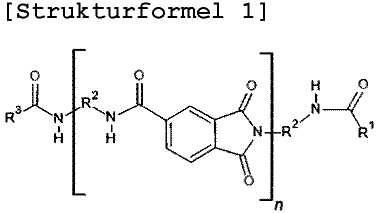

Das Polyamidimid gemäß der Strukturformel 1 hat eine Polyamidimid-Hauptkette und kann mehrere funktionelle Gruppen aufweisen. Beispielshalber können in der Polyamidimid-Hauptkette als R² der Strukturformel 1 Phenylengruppen enthalten sein. Durch die Phenylengruppen kann die Flexibilität der Polyamidimid-Hauptkette eingestellt werden. Zum Beispiel können ein Biphenyl, ein Di- oder Triphenylmethan, Ortho- oder Paradibenzylbenzol oder Tribenzylbenzol eingesetzt werden.

Des Weiteren können Furane insbesondere endständig, zum Beispiel als R³ an der Polyamidimid-Hauptkette angeordnet sein. Durch ihre Polarität kann so die Polarität der dielektrischen Schicht eingestellt werden. Zum Beispiel können als Furane Benzofurane, Dibenzofurane, Furanone oder Hydroxyfuranone eingesetzt werden.

Alternativ können Anhydride als R³ eingesetzt werden.

Weiterhin bestehen bevorzugt Quervernetzungen zwischen den verschiedenen Polyamidimid-Hauptketten in der dielektrischen Schicht 2.

Bevorzugt sind die Polyamidimid-Hauptketten über Urethanbrücken und/oder Imide miteinander verknüpft. Diese Verknüpfungen können sich zum Beispiel endständig an der Stelle des Rests R¹ in der Strukturformel 1 befinden. Alternativ dazu können noch unverbrückte Gruppen in R¹-Position vorhanden sein, wie zum Beispiel LactameIsocyanate, oder Anhydride.

Bevorzugt wurde die dielektrische Schicht 2 aus einer zu Beschichtung von Drähten geeigneten Polyamidimid-Harz-Mischung, z.B. einer RESISTHERN^{®} AI 336 L Lösung hergestellt.

Oberhalb und unterhalb der dielektrischen Schicht 2 sind eine erste Elektrode 3 und eine zweite Elektrode 4 angeordnet. Sowohl die erste Elektrode 3, die dielektrische Schicht 2 als auch die zweite Elektrode 4 können flächig ausgebildet sein.

Eine bevorzugte Stapelung erfolgt über die größten Flächen der flächig ausgebildeten Schichten.

Die Schichtdicke der Elektroden kann zum Beispiel 10 bis 50 nm betragen, bevorzugt 20 nm. Abhängig vom Herstellungsverfahren kann die Schichtdicke der dielektrischen Schicht 2 im Bereich zwischen 500 nm und 10 µm eingestellt werden.

Die Elektroden können aus Aluminium oder Silber bestehen oder bevorzugt aus einer Aluminium-Zink-Legierung. Alternativ können die Elektroden Mehrschichtelektroden aus Chrom/Aluminium, Chrom/Silber oder Chrom/Nickel/Aluminium oder Chrom/Nickel/Silber sein. Zusätzlich zu den hier gezeigten Elementen kann eine Schutzschicht aus Kohlenwasserstoffverbindungen, wie zum Beispiel Parylenen oder fluorbasierten Kohlenwasserstoffen auf den Seiten des Kondensators angebracht sein, welche nicht die Elektroden aufweisen (nicht dargestellt).

Als nicht in den Figuren gezeigte Alternative kann an der dielektrischen Schicht nur eine Elektrode anliegen.

Das in Figur 1 gezeigte erste Ausführungsbeispiel eines Kondensators kann durch jede beliebige Methode hergestellt werden. Bevorzugt wird es durch lösungsmittelbasierte Prozesse hergestellt. Zum Beispiel kann zuerst die erste Elektrode 3 auf einem Substrat hergestellt werden. Das Substrat kann ein starres Substrat, wie zum Beispiel Glas oder ein Halbleiterwafer sein. Es kann eine Metallfolie sein, wie zum Beispiel Aluminium oder Kupfer oder eine flexible Polymerfolie, wie zum Beispiel Polyimid oder ein Releasetape. Auf einer Oberfläche des Substrats wird die erste Elektrode durch Physical Vapour Deposition (Physikalische Gasphasen Abscheidung, PVD), wie zum Beispiel Sputtern oder thermisches Verdampfen aufgebracht.

Auf der Oberfläche der Elektroden 3 als Depositionsfläche kann nun die dielektrische Schicht 2 aus einer Prepolymer-Polyamidimidlösung aufgebracht werden. Die Prepolymer-Polyamidimidlösung enthält bevorzugt ein weitgehend quervernetzungsfreies Polyamidimid.

Die Prepolymer-Polyamidimidlösung wird aus einer kommerziell erhältlichen Polyamidimid-Harz-Mischung (z.B. RESISTHERN^{®} AI 336) durch zusätzliches Verdünnen mit Lösungsmitteln hergestellt.

Die Polyamidimid-Harz-Mischung enthält in etwa 36 % nichtflüchtige Stoffe (vorwiegend Polyamidimid-Hauptketten) in einer Lösung aus N-methylpyrolidon (NMP) und Xylol. Sie weist eine ursprüngliche Viskosität von 4750 ± 1750 mPa s auf. Weiterhin weist sie eine Dichte von etwa 1,1 g/ml auf.

Die so vorgelegte Polyamidimidlösung wird mit Xylol oder N-methylpyrolidon auf Konzentration von 20 % oder weniger der ursprünglichen Polyamidimid-Konzentration eingestellt. Beispielshalber wird eine Polyamidimid-Konzentration von 19 Masse% oder 15 Masse% in Bezug auf die ursprüngliche Polyamidimid-Harz-Mischung in Xylol hergestellt.

Die verwendete Konzentration richtet sich nach der zu erreichenden Schichtdicke oder nach der Art des verwendeten Depositionsverfahrens.

Auf die Oberflächen der ersten Elektrode 3 als Depositionsfläche kann nun die so hergestellte Prepolymer-Polyamidimidlösung aufgetragen werden. Das Auftragen kann durch Rakeln, Schablonendruck, Rotationsbeschichtung oder Sprühbeschichtung vorgenommen werden. Die Beschichtungsmethode richtet sich nach der zu erreichenden Dicke der dielektrischen Schicht 2. So können insbesondere dickere Schichten im Bereich zwischen 500 nm und 5 µm durch Rotationsbeschichtung oder Sprühbeschichtung aufgebracht werden oder dickere Schichten im Bereich zum Beispiel von 1 µm bis 10 µm durch Rakeln oder Schablonendruck.

Die so aufgebrachte Lösung wird bei einer Temperatur zwischen 60 und 100°C, und bevorzugt bei 80°C getrocknet. Anschließend wird der getrocknete Film bei Temperaturen über 200°C, bevorzugt bei 250°C getempert.

Beim Trocknen wird der Großteil des Lösungsmittels entfernt. Weitere Anteile an flüchtigen Stoffen werden durch das Tempern entfernt. Zusätzlich kann beim Tempern die Quervernetzung zwischen den Hauptketten einsetzen. Bei einer Temperatur von 250°C kann eine weitgehend vollständige Quervernetzung in 5-10 min erreicht werden. Hierbei werden bevorzugt als Lactam geschützte Isocyanatgruppen aktiviert, welche anschließend mit vorhandenen Hydroxygruppen, welche zum Beispiel an Furanresten vorliegen, oder mit Anhydriden reagieren.

Nach Abkühlen kann auf die so präparierte dielektrische Schicht die zweite Elektrode 4 wieder durch PVD aufgebracht werden.

Zum Abschluss des Verfahrens kann das Substrat entfernt werden, um den Gegenstand aus Figur 1 zu erhalten. Grundsätzlich kann es aber auch am Kondensator verbleiben.

Figur 2A zeigt eine thermogravimetrische Analyse (TGA) der eingesetzten Polyamidimid-Harz-Mischung. Die Temperaturrampe beträgt konstant 10 K/min. Wie der Graph von Figur 2A zeigt, treten bis zu einer Temperatur von etwa 275°C keinerlei Masseverluste auf. Erst bei einer Temperatur über etwa 300°C tritt ein Masseverlust von unter 5% auf. Erst über 400°C liegt der Masseverlust oberhalb von 5% vor.

Dies beweist die extrem hohe Temperaturstabilität von Polyamidimid als Dielektrikum. Insbesondere können für zukünftige Anwendungen eine Dauertemperaturstabilität von über 200°C erwartet werden.

Dies erlaubt insbesondere den Einbau des fertigen Kondensators etwa durch Löten, ohne dass Degeneration des Bauteiles bzw. der dielektrischen Schicht zu erwarten wäre.

Weiter vorteilhafte Eigenschaften des Polyamidimids als Dielektrikum für einen Kondensator zeigen sich in den folgenden Tabellen 1 und 2 sowie in dem Graphen der Figur 2B.

Tabelle 1 zeigt den dielektrischen Verlustfaktor (tan δ) eines Polyamidimid-Plattenkondensators, ähnlich dem Aufbau wie er in Figur 1 beschrieben wurde. Die dielektrische Schicht, welche hier vermessen wurde, wurde aus der oben beschriebenen Polyamidimid-Harz-Mischung, welche auf einen Massenanteil von 15 %, bezogen auf die ursprüngliche Mischung mit Xylol als Lösungsmittel verdünnt wurde, vermessen (Rakelgeschwindigkeit 50 mm/s). Die Schichtdicke betrug 3 µm, die Fläche des Kondensators betrug 50 mm². Die Messung wurde mit einem Keysight E4990A mit Kühl/Heizsystem PHECOS von Novocontrol durchgeführt.

**[Tabelle 1]**

| tan*δ* | | | | |
|---|---|---|---|---|
| Temperatur | Frequenzen | | | |
| | 1 kHz | 10 kHz | 100 kHz | 1 MHz |
| Raumtemp. | 0, 009 | 0,016 | 0,019 | 0,014 |
| 100°C | 0,009 | 0,009 | 0, 010 | 0,017 |
| 150°C | 0,015 | 0,013 | 0,012 | 0, 014 |

Wie Tabelle 1 zeigt, liegt der Verlustfaktor im untersuchten Frequenz- und Temperaturbereich stets unter 2%. Bemerkenswerterweise verbessert sich der Verlustfaktor sogar leicht mit steigender Temperatur. Dies zeigt, dass Polyamidimid als Dielektrikum hervorragende dielektrische Eigenschaften mit sich bringt.

Dies bestätigt sich auch in dem in Figur 2B gezeigten Graphen, welcher den Verlustfaktor der in Bezug auf Tabelle 1 beschriebenen dielektrischen Schicht bei einer konstanten Temperatur von 150°C in Abhängigkeit der Frequenz zeigt. So kann beobachtet werden, dass der Verlustfaktor im untersuchten Frequenzbereich zwischen 1 kHz und 1 MHz in erster Näherung als konstant betrachtet werden kann.

Dieses konstante Verhalten erlaubt einen breiten Einsatz von Polyamidimid-Kondensatoren im Allgemeinen und eine hohe Flexibilität des einzelnen Polyamidimid-Kondensators im Speziellen.

Tabelle 2 zeigt die Abhängigkeit der Permittivität (εᵣ) eines Polyamidimid-Plattenkondensators entsprechend dem Aufbau nach Figur 1 von Temperatur und elektrischer Frequenz. Die hier verwendete dielektrische Schicht wurde mit einer auf 19 gew%igen Lösung bezogen auf die ursprünglich eingesetzte Polyamidimid-Harz-Mischung hergestellt. Die Schichtdicke betrug 5 µm und die Fläche des Kondensators 50 mm². Die Messung wurde mit einem Keysight E4990A mit Kühl/Heizsystem PHECOS von Novocontrol durchgeführt.

**[Tabelle 2]**

| *εᵣ* | | | | |
|---|---|---|---|---|
| Temperatur | Frequenzen | | | |
| | 1 kHz | 10 kHz | 100 kHz | 1 MHz |
| Raumtemp. | 4,0 | 4,0 | 3,8 | 3,6 |
| 100°C | 4,6 | 4,4 | 4,3 | 4,1 |
| 150°C | 5,0 | 4,7 | 4,5 | 4,3 |

Tabelle 2 zeigt, dass nur eine moderate Variation der Permittivität in Bezug auf Temperatur und Frequenz vorliegt. Zwar ist grundsätzlich eine Abnahme der Permittivität mit steigender Frequenz beziehungsweise eine Zunahme der Permittivität mit steigender Temperatur zu beobachten, jedoch weist das Polyamidimid mit einer durchschnittlichen Permittivität von 4 eine beinahe doppelt so hohe Permittivität auf, wie das Standardmaterial BOPP.

Diese hohe Permittivität wird dem partiell aromatischen Charakter, sowie den polaren Gruppen, wie beispielsweise Furangruppen des Polyamidimids zugeschrieben. Zudem ist es grundsätzlich möglich, das Polyamidimid so einzustellen, dass die dielektrischen Verluste oder sonstige Eigenschaften in einem bestimmten Frequenzbereich optimiert werden. Dies kann sowohl durch die Zusammensetzung einer Prepolymer-Polyamidimidlösung aus verschiedenen Polyamidimiden geschehen, als auch durch die spezielle Auswahl der funktionellen Gruppen an den Hauptketten.

Bei dem in Tabelle 2 beschriebenen Plattenkondensator liegt die Durchbruchspannung bei Raumtemperatur zwischen 300 und 550 V/µm, abhängig von der Frequenz (gemessen mit Sefelec S50). Der Isolationswiderstand bei Raumtemperatur liegt stets über 3 TΩ (gemessen mit Novocontrolsystem Alpha A).

Dies zeigt, dass das verwendete Polyamidimid exzellente Permittivität bei gleichzeitig hoher Durchbruchspannung und Ohmisolationswiderstand aufweist.

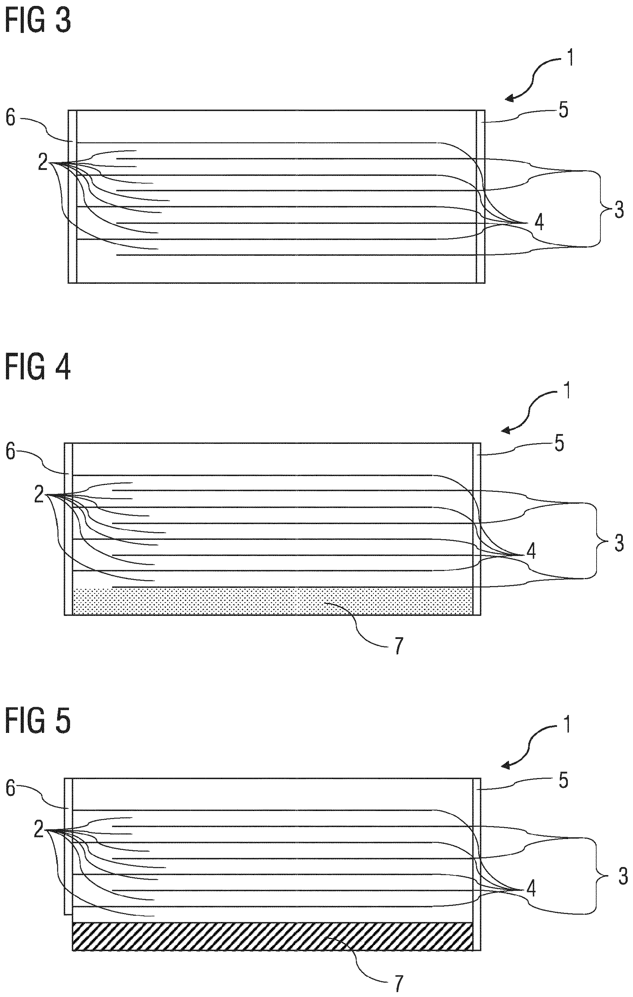

Figur 3 zeigt ein zweites Ausführungsbeispiel eines Kondensators 1 in schematischem Querschnitt. Der Kondensator 1 weist eine Vielzahl von ersten Elektroden 3 auf, welche alternierend mit zweiten Elektroden 4 gestapelt vorliegen. Beide Elektroden sind flächige Elektroden.

Zwischen den ersten Elektroden 3 und den zweiten Elektroden 4, also jeweils zwischen zwei benachbarten Elektroden, ist immer eine dielektrische Schicht 2 angeordnet, welche jeweils der dielektrischen Schicht 2 aus dem ersten Ausführungsbeispiel in Figur 1 entspricht.

Die ersten Elektroden 3 und die zweiten Elektroden 4 haben den Charakter von Innenelektroden.

Es handelt sich beim zweiten Ausführungsbeispiel eines Kondensators 1 also um einen Vielschichtkondensator.

An gegenüberliegenden Seitenflächen des Vielschichtkondensators, sind erste Außenkontakte 5 und zweite Außenkontakte 6 angeordnet.

Die ersten Elektroden 3 sind mit dem ersten Außenkontakt 5 elektrisch leitend verbunden. Die zweiten Elektroden 4 haben sind elektrisch leitend mit dem zweiten Außenkontakt 6 verbunden.

Der so zusammengesetzte Kondensator kann ein Surface Mounted Device (SMD) sein, welcher sich aufgrund seiner temperaturstabilen dielektrischen Schicht 2 sehr gut zum verlöten eignet. Um den Kondensator 1 noch vorteilhafter als SMD-Kondensator eingesetzten zu können, können die Außenkontakte 5 und 6 klammerförmig aufgebaut sein. Das heißt, die Außenkontakte 5 und 6 können sich ein Stückweit auf die beiden Seitenflächen in Stapelrichtung erstrecken.

Der Kondensator kann zum Beispiel quaderförmig sein und aus insgesamt 1000 Wiederholeinheiten oder mehr aufweisen, welche eine erste Elektrode, eine dielektrische Schicht, eine zweite Elektrode und eine weitere dielektrische Schicht umfassen. Er kann eine Länge von 3 bis 4 mm, eine Breite von 2 bis 3 mm und eine Höhe von 1 bis 2 mm aufweisen. Die einzelne dielektrische Schicht 2 kann hier eine Dicke von 500 nm bis 5 µm aufweisen, bevorzugt zwischen 500 nm und 2 µm. Die Innenelektroden haben eine Dicke von 10 bis 50 nm und bevorzugt von 20 nm.

Die Dimensionen des fertigen Kondensators können sich aber auch von den hier angegebenen unterscheiden. Länge, Breite, Höhe und Schichtdicken können auf verschiedene technische Voraussetzungen hin oder hinsichtlich verschiedener technischer Aufgaben angepasst werden.

Ein Herstellungsverfahren kann ähnlich zu dem Herstellungsverfahren des ersten Ausführungsbeispiels sein. So kann auf einem Substrat zum Beispiel eine erste Elektrodenschicht 3 durch PVD aufgebracht werden. Anschließend kann aus Lösung eine dielektrische Schicht 2 aufgebracht werden und anschließend wiederum mit PVD eine zweite Elektrodenschicht 4. Auf diese wird wiederum aus Lösung eine dielektrische Schicht 2 aufgebracht. Dies kann wiederholt werden um eine gewünschte Anzahl an Schichten oder eine bestimmte Kapazität des Kondensators zu erreichen.

Grundsätzlich können in dem Verfahren die Innenelektroden strukturiert werden. Dies kann entweder bereits bei der Deposition oder nach dem Physical Vapour Deposition Verfahren geschehen.

Nach dem Stapeln kann das Substrat entfernt werden.

Optional kann anschließend auf den Seitenflächen, welche frei von Außenkontakten bleiben eine Schutzschicht (nicht dargestellt) ähnlich der des ersten Ausführungsbeispiels mittels Aufdampfprozess und lösungsmittelbasierten Prozessen oder Beschichtungsverfahren aufgebracht werden.

Die Außenkontakte 5 und 6 werden auf dem fertig gestapelten Kondensator 1 angebracht. Diese können zum Beispiel aus Messing, Kupfer, Zinn, Aluminium, Silber oder ähnlichem bestehen und entweder mittels Physical Vapour Deposition Verfahren oder anderen z.B. lösungsmittelbasierten Prozessen aufgebracht werden.

Figur 4 zeigt in schematischem Querschnitt ein drittes Ausführungsbeispiel eines Kondensators 1, welcher auch ein Vielschichtkondensator ist.

Der Kondensator 1 in Figur 4 entspricht in weiten Teilen dem Kondensator, wie er in Figur 3 gezeigt und zuvor beschrieben wurde. In dem in Figur 4 gezeigten Beispiel ist jedoch das ursprüngliche Substrat, welches hier das Substrat 7 ist als immer noch am Bauteil vorhanden.

Das Substrat 7, im Fall von Figur 4, ist isolierend und kann zum Beispiel ein Glassubstrat, ein Halbleiterwafer sein oder ein flexibles Substrat, wie Polyimidfolien oder ein Releasetape sein.

Das Herstellungsverfahren zum dritten Ausführungsbeispiel in Figur 4 entspricht dem des zweiten Ausführungsbeispiels in Figur 3, bis auf das Entfernen des Substrats.

In Figur 5 zeigt ein viertes Ausführungsbeispiel eines Kondensators 1(hier ein Vielschichtkondensator) in schematischem Querschnitt. Das in Figur 5 gezeigte vierte Ausführungsbeispiel ähnelt in großen Teilen jenem aus Figur 4.

Jedoch ist hier das Substrat 7 ein metallisches, leitendes Substrat, zum Beispiel aus Aluminium, Kupfer oder ähnlichen Materialien. Es liegt zum Beispiel als Folie vor. Aufgrund seines leitenden Charakters ist es nicht nötig eine leitende Schicht als erste Elektrode 3 auf dem Substrat anzubringen. Das Substrat 7 selbst kann als Ersatz für eine der ersten Elektroden 3 dienen. Auf diesen wird dann direkt die dielektrische Schicht 2 aufgebracht.

Da das Substrat bevorzugt über die gesamte Breite und Länge des Kondensators geht, muss darauf geachtet werden, dass der zweite Außenkontakt 5 nicht den elektrischen Kontakt mit dem Substrat trifft.

Auch das Verfahren ähnelt dem in Figur 4 beschriebenen Ausführungsbeispiel.

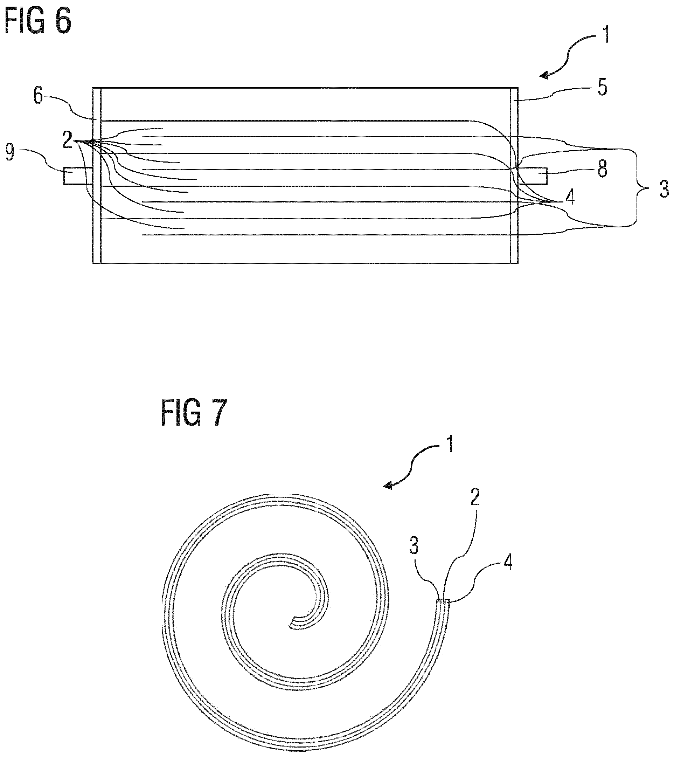

Das fünfte Ausführungsbeispiel, welches in Figur 6 in schematischem Querschnitt gezeigt ist, ähnelt in beinahe allen Aspekten, dem zweiten Ausführungsbeispiel eines Kondensators 1. Es handelt sich also auch um einen Vielschichtkondensator. Jedoch weist dieser Vielschichtkondensator an seinen Außenkontakten 5 und 6 Drähte 8 und 9 auf, welche in einer Anwendung den Einbau in Durchsteckmontage ermöglichen. Es handelt sich also um einen Durchsteckkondensator. Die Drähte 8 und 9 erzeugen einen elektrischen und meist einen mechanischen Kontakt mit Anschlussstellen in einer Anwendung. Die Drähte 8 und 9 können durch beliebige Verfahren, wie zum Beispiel Bonden, an dem Kondensator 1 befestigt werden.

Figur 7 zeigt in schematischem Querschnitt ein sechstes Ausführungsbeispiel eines Kondensators 1. Hier handelt es sich um einen Wickelkondensator. In seinem Aufbau ähnelt der Wickelkondensator dem ersten Ausführungsbeispiel, das heißt, eine dielektrische Schicht 2 wird von einer ersten Elektrode 3 und einer zweiten Elektrode 4 sandwichartig umschlossen. Die entsprechende sandwichartige Struktur ist zu einem Wickelkondensator aufgerollt.

Das verwendete Herstellungsverfahren unterscheidet sich jedoch von dem Herstellungsverfahren entsprechend Figur 1. So wird bevorzugt auf einem Substrat mit dem zu Figur 1 beschriebenen Depositionsverfahren zuerst der dielektrische Film 2 hergestellt. Dieser kann anschließend vom Substrat gelöst werden. Er kann danach durch beliebige Verfahren nachbearbeitet werden. Anschließend kann die so erhaltene Folie einseitig oder, im gegenwärtigen Fall, beidseitig durch PVD metallisiert werden. Die so erhaltene metallisierte Folie kann zu einem Wickelkondensator gewickelt werden. Bevorzugte Schichtdicken für Wickelkondensatorfolien mit Polyamidimid liegen im Bereich zwischen 1 µm und 10 µm, bevorzugt zwischen 2 µm und 5 µm.

Als zusätzliches bzw. alternatives Verfahren zur Herstellung verschiedener Bauformen kann zunächst das Ausbilden eines Polyamidimid-Films für ein Dielektrikum in einem Rolle-zu-Rolle-Verfahren aus Lösung durch Rakeln einer Prepolymer-Polyamidimidlösung auf ein Substrat erfolgen, welches vorher mit einem Trennmittel versehen wurde. Anschließend wird ein Trocknen und gleichzeitiges Tempern bei über 200°C, bevorzugt bei über 220°C, am besten bei 250°C durchgeführt. Danach folgt die Delaminierung bzw. das Ablösen des getrockneten und vernetzten Polyamidimid-Films vom Substrat und Aufwickeln desselben. Optional kann eine Zwischenfolie als Schutz mitgewickelt werden. Anschließend erfolgt die Aufbringung der Elektroden. Dies wird bevorzugt ebenfalls in einem Rolle-zu-Rolle-Verfahren durchgeführt. Die Elektrodenschicht bzw. die Elektrodenschichten kann bzw. können hierbei je nach technischen Anforderungen einseitig bzw. beidseitig aufgebracht werden. Die Elektroden können strukturiert werden oder unstrukturiert verbleiben. Die Dicke der Elektroden zum Rand hin kann angepasst werden oder angepasst sein. Danach folgt eine Segmentierung der Rolle mit optionaler anschließender Pressung zum Flachwickel. Anschließend werden Außenkontakte mittels Flammenspritzen, PVD (z. B. Sputtern, thermisches Verdampfen) oder durch galvanische Verfahren aufgebracht. Durch letzteres kann ein SMD-Bauteil hergestellt werden. Im Falle des Flachwickels folgt ebenfalls das Auftragen der Seitenkontaktierung und zusätzlich dazu auch ein Anbringen von Drähten und anschließendes Vergießen mit einem temperaturstabilen, wasserabweisenden Vergussmaterial. Im Falle des SMD-Kondensators kann eine Aufbringung einer Schutz- bzw. Barriereschicht, wie schon zuvor beschrieben, erfolgen.

Die weitere Verarbeitung der wie oben hergestellten Folie kann aber auch im sheet-to-sheet-Verfahren erfolgen. Hierbei werden Folienstücke auf eine definierte Größe, wie z.B. auf etwa DIN A5 oder DIN A4 Größe geschnitten. Diese Folienstücke werden anschließen mit den Elektroden beschichtet Dies entspricht der Herstellung eines Mutterstacks. Die Elektrodenbeschichtung erfolgt beidseitig und strukturiert mittels PVD-Verfahren. Danach werden die einzelnen Folienstücke gestapelt und gepresst, danach werden die einzelnen Kondensatoren aus dem Mutterstack geschnitten, mit einer Seitenkontaktierung versehen, z.B. mittels Flammspritzen, Galvanik oder anderem, und anschließend erfolgt eine Stabilisierung mittels Verguss oder einer Schutz- oder Barriereschicht.

### Bezugszeichenliste

- 1: Kondensator
- 2: dielektrische Schicht
- 3: erste Elektrode
- 4: zweite Elektrode
- 5: erster Außenkontakt
- 6: zweiter Außenkontakt
- 7: Substrat
- 8: erster Draht
- 9: zweiter Draht

## Patentansprüche

1. Kondensator (1) aufweisend eine dielektrische Schicht (2), wobei die dielektrische Schicht (2) Polyamidimid enthält und eine erste Elektrode (3) direkt angrenzend an der dielektrischen Schicht (2) angeordnet ist, **dadurch gekennzeichnet, dass** die dielektrische Schicht einheitlich ist.

2. Kondensator (1) nach Anspruch 1, wobei eine zweite Elektrode (4) ebenfalls direkt angrenzend an der dielektrischen Schicht (2) angeordnet ist.

3. Kondensator (1) nach Anspruch 1 oder 2, wobei die dielektrische Schicht (2) zu 50 gew% oder mehr aus Polyamidimid besteht.

4. Kondensator (1) nach einem der Ansprüche 1 bis 3, wobei die dielektrische Schicht (2) frei von festen anorganischen Materialien ist.

5. Kondensator (1) nach einem der Ansprüche 1 bis 4, wobei die dielektrische Schicht (2) Polyamidimid-Hauptketten enthält, welche die Amid- und Imid-Gruppen des Polyamidimids umfassen.

6. Kondensator (1) nach Anspruch 5, wobei in der dielektrischen Schicht (2) chemische Quervernetzungen zwischen den Polyamidimid-Hauptketten oder innerhalb einer Polymer-Hauptkette ausgebildet sind.

7. Kondensator (1) nach Anspruch 6, wobei die Quervernetzungen Polyamidimid-Hauptketten linear miteinander verknüpfen.

8. Kondensator (1) nach Anspruch 6 oder 7, wobei die chemischen Quervernetzungen ausgewählt sind aus Urethanbrücken, Imidbrücken und Ureabrücken.

9. Kondensator (1) nach Anspruch 7, wobei die lineare Verknüpfung über eine Imidbrücke oder eine Urethanbrücken ausgebildet ist.

10. Kondensator (1) nach Anspruch 7, wobei neben linearen Verknüpfungen dreidimensionale Quervernetzungen über Ureabrücken ausgebildet sind.

11. Kondensator (1) nach einem der Ansprüche 4 bis 10, wobei die Polyamidimid-Hauptketten partiell aromatisch sind.

12. Kondensator (1) nach einem der Ansprüche 1 bis 11, wobei das Polyamidimid als funktionelle Gruppen Phenylengruppen, Anhydride und/oder Furangruppen aufweist.

13. Kondensator (1) nach Anspruch 8, wobei das Polyamidimid eine Struktur gemäß der chemischen Formel 1 aufweist, wobei
- R¹ ein Lactam, ein Anhydrid, eine Urethanbrücke oder eine Imidbrücke ist,
- R² eine Phenylengruppe ist, und
- R³ ein Furan, ein Amin, ein Anhydrid, eine Urethanbrücke oder eine Imidbrücke ist.

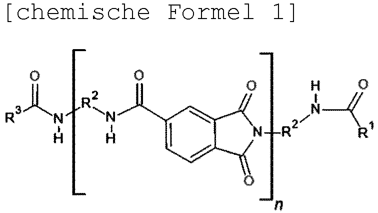

14. Kondensator (1) nach einem der Ansprüche 1 bis 13, wobei eine Vielzahl erster Elektrodenschichten (3) alternierend mit zweiten Elektrodenschichten (4) gestapelt ist, und zwischen je zwei benachbarten Elektrodenschichten (3, 4) eine dielektrische Schicht (2) angeordnet ist.

15. Kondensator (1) nach einem der Ansprüche 1 bis 14, wobei alle ersten Elektrodenschichten (3) mit einem ersten Außenkontakt (5) elektrisch leitend verbunden sind, und alle zweiten Elektrodenschichten (4) mit einem zweiten Außenkontakt (6) elektrisch leitend verbunden sind.

16. Kondensator (1) nach einem der Ansprüche 1 bis 15, wobei ein Substrat (7) an einer Seitenfläche des Kondensators, welche parallel zur Ebene der Elektrodenschichten (3, 4) liegt, angeordnet ist.

17. Kondensator (1) nach einem der Ansprüche 14 bis 16, wobei der Kondensator (1) ein Surface Mounted Device (SMD) ist.

18. Kondensator (1) nach einem der Ansprüche 14 bis 16, wobei der Kondensator Drähte (8, 9) zur Durchsteckmontage aufweist.

19. Kondensator (1) nach einem der Ansprüche 14 und 15, wobei der Kondensator (1) ein Wickelkondensator ist.

20. Verfahren zur Herstellung eines Kondensators (1) umfassend die Herstellung einer einheitlichen dielektrischen Schicht (2) durch
- Aufbringen einer Prepolymer-Polyamidimidlösung auf einer Depositionsfläche,
- Trocknung der Prepolymer-Polyamidimidlösung auf der Depositionsfläche,
- Tempern der getrockneten Prepolymer-Polyamidimidlösung.

21. Verfahren zur Herstellung eines Kondensators (1) nach Anspruch 20, wobei
- die Depositionsfläche eine Oberfläche eines Substrats (7) ist,
- die dielektrische Schicht (2) nach deren Herstellung von der Depositionsfläche gelöst wird um eine dielektrische Folie zu erzeugen,
- die dielektrische Folie metallisiert wird,
- und die metallisierte dielektrische Folie gewickelt wird.

22. Verfahren zur Herstellung eines Kondensators (1) nach Anspruch 20, wobei
- ein elektrisch leitfähiges Substrat (7) verwendet wird oder ein Substrat (7), auf dessen Oberfläche eine erste Elektrodenschicht (3) erzeugt wird,
- die Depositionsfläche die Oberfläche des elektrisch leitfähigen Substrats (7) oder der ersten Elektrodenschicht (3) ist,
- nach dem Aufbringen der dielektrischen Schicht (2) auf die Depositionsfläche eine zweite Elektrodenschicht (4) auf der dielektrischen Schicht (2) hergestellt wird, und
- eine weitere dielektrische Schicht (2) auf der zweiten Elektrodenschicht (4) hergestellt wird, durch
- Aufbringen der Prepolymer-Polyamidimidlösung auf der zweiten Elektrodenschicht (4),
- Trocknung der Prepolymer-Polyamidimidlösung auf der zweiten Elektrodenschicht (4),
- Tempern der getrockneten Prepolymer-Polyamidimidlösung.

23. Verfahren zur Herstellung eines Kondensators (1) nach einem der Ansprüche 20 bis 22, wobei die Prepolymer-Polyamidimidlösung Polyamidimid-Hauptketten enthält, an welchen Isocyanatgruppen, Lactam-Gruppen, und/oder Anhydridgruppen an Polyamidimid-Hauptketten angeordnet sind.

24. Verfahren zur Herstellung eines Kondensators (1) nach Anspruch 20, wobei die Isocyanatgruppen, Lactam-Gruppen und/oder Anhydridgruppen endständig an Polyamidimid-Hauptketten angeordnet sind.

25. Verfahren zur Herstellung eines Kondensators (1) nach einem der Ansprüche 20 bis 24, wobei die Prepolymer-Polyamidimidlösung durch Rakeln, Düsenbeschichtung, Schablonendruck, Rotationsbeschichtung oder Sprühbeschichtung aufgebracht wird.

## Claims

1. Capacitor (1) comprising a dielectric layer (2), wherein the dielectric layer (2) contains polyamideimide and a first electrode (3) is arranged directly adjacent to the dielectric layer (2), **characterized in that** the dielectric layer is uniform.

2. Capacitor (1) according to Claim 1, wherein a second electrode (4) is also arranged directly adjacent to the dielectric layer (2).

3. Capacitor (1) according to Claim 1 or 2, wherein the dielectric layer (2) consists to an extent of 50 wt% or more of polyamideimide.

4. Capacitor (1) according to any of Claims 1 to 3, wherein the dielectric layer (2) is free from solid inorganic materials.

5. Capacitor (1) according to any of Claims 1 to 4, wherein the dielectric layer (2) contains polyamideimide main chains comprising the amide and imide groups of the polyamideimide.

6. Capacitor (1) according to Claim 5, wherein in the dielectric layer (2) there are chemical crosslinks formed between the polyamideimide main chains or within a polymer main chain.

7. Capacitor (1) according to Claim 6, wherein the crosslinks link polyamideimide main chains linearly to one another.

8. Capacitor (1) according to Claim 6 or 7, wherein the chemical crosslinks are selected from urethane bridges, imide bridges and urea bridges.

9. Capacitor (1) according to Claim 7, wherein the linear linkage is formed via an imide bridge or a urethane bridge.

10. Capacitor (1) according to Claim 7, wherein, in addition to linear linkages, there are three-dimensional crosslinks formed via urea bridges.

11. Capacitor (1) according to any of Claims 4 to 10, wherein the polyamideimide main chains are partially aromatic.

12. Capacitor (1) according to any of Claims 1 to 11, wherein functional groups of the polyamideimide include phenylene groups, anhydrides and/or furan groups.

13. Capacitor (1) according to Claim 8, wherein the polyamideimide has a structure according to the chemical formula 1, wherein
- R¹ is a lactam, an anhydride, a urethane bridge or an imide bridge,
- R² is a phenylene group, and
- R³ is a furan, an amine, an anhydride, a urethane bridge or an imide bridge.

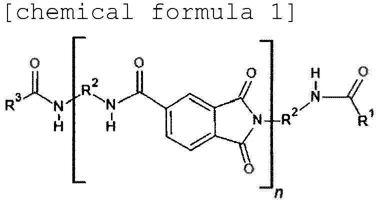

14. Capacitor (1) according to any of Claims 1 to 13, wherein a multiplicity of first electrode layers (3) are stacked in alternation with second electrode layers (4), and a dielectric layer (2) is arranged between respective pairs of adjacent electrode layers (3, 4).

15. Capacitor (1) according to any of Claims 1 to 14, wherein all first electrode layers (3) are in electrically conducting connection with a first external contact (5), and all second electrode layers (4) are in electrically conducting connection with a second external contact (6).

16. Capacitor (1) according to any of Claims 1 to 15, wherein a substrate (7) is arranged at a side face of the capacitor that is parallel to the plane of the electrode layers (3, 4).

17. Capacitor (1) according to any of Claims 14 to 16, wherein the capacitor (1) is a surface-mounted device (SMD).

18. Capacitor (1) according to any of Claims 14 to 16, wherein the capacitor has wires (8, 9) for through-hole mounting.

19. Capacitor (1) according to either of Claims 14 and 15, wherein the capacitor (1) is a wound capacitor.

20. Method for producing a capacitor (1), comprising the production of a unitary dielectric layer (2) by
- applying a prepolymer polyamideimide solution on a deposition area,
- drying the prepolymer polyamideimide solution on the deposition area,
- heat-treating the dried prepolymer polyamideimide solution.

21. Method for producing a capacitor (1) according to Claim 20, wherein
- the deposition area is a surface of a substrate (7),
- the dielectric layer (2) after production thereof is parted from the deposition area to fabricate a dielectric film,
- the dielectric film is metallized,
- and the metallized dielectric film is wound.

22. Method for producing a capacitor (1) according to Claim 20, wherein
- an electrically conductive substrate (7) is used or a substrate (7) on whose surface a first electrode layer (3) is fabricated,
- the deposition area is the surface of the electrically conductive substrate (7) or of the first electrode layer (3),
- after application of the dielectric layer (2) to the deposition area, a second electrode layer (4) is produced on the dielectric layer (2), and
- a further dielectric layer (2) is produced on the second electrode layer (4), by
- applying the prepolymer polyamideimide solution on the second electrode layer (4),
- drying the prepolymer polyamideimide solution on the second electrode layer (4),
- heat-treating the dried prepolymer polyamideimide solution.

23. Method for producing a capacitor (1) according to any of Claims 20 to 22, wherein the prepolymer polyamideimide solution contains polyamideimide main chains on which isocyanate groups, lactam groups and/or anhydride groups are arranged on polyamideimide main chains.

24. Method for producing a capacitor (1) according to Claim 20, wherein the isocyanate groups, lactam groups and/or anhydride groups are arranged terminally on polyamideimide main chains.

25. Method for producing a capacitor (1) according to any of Claims 20 to 24, wherein the prepolymer polyamideimide solution is applied by doctor blade coating, jet coating, stencil printing, rotary coating or spray coating.

## Revendications

1. Condensateur (1) comportant une couche diélectrique (2), la couche diélectrique (2) contenant du polyamide-imide et une première électrode (3) étant disposée de manière directement adjacente à la couche diélectrique (2), **caractérisé en ce que** la couche diélectrique est uniforme.

2. Condensateur (1) selon la revendication 1, dans lequel une deuxième électrode (4) est également disposée de manière directement adjacente à la couche diélectrique (2).

3. Condensateur (1) selon la revendication 1 ou 2, dans lequel la couche diélectrique (2) est constituée de 50 % en poids ou plus de polyamide-imide.

4. Condensateur (1) selon l'une quelconque des revendications 1 à 3, dans lequel la couche diélectrique (2) est exempte de matériaux inorganiques solides.

5. Condensateur (1) selon l'une quelconque des revendications 1 à 4, dans lequel la couche diélectrique (2) contient des chaînes principales de polyamide-imide comprenant les groupes amide et imide du polyamide-imide.

6. Condensateur (1) selon la revendication 5, dans lequel des réticulations chimiques sont formées dans la couche diélectrique (2) entre les chaînes principales de polyamide-imide ou à l'intérieur d'une chaîne principale de polymère.

7. Condensateur (1) selon la revendication 6, dans lequel les réticulations relient linéairement les unes aux autres les chaînes principales de polyamide-imide.

8. Condensateur (1) selon la revendication 6 ou 7, dans lequel les réticulations chimiques sont choisies parmi les ponts uréthane, les ponts imide et les ponts urée.

9. Condensateur (1) selon la revendication 7, dans lequel la liaison linéaire est formée par l'intermédiaire d'un pont imide ou d'un pont uréthane.

10. Condensateur (1) selon la revendication 7, dans lequel, en plus des liaisons linéaires, des réticulations tridimensionnelles sont formées par l'intermédiaire de ponts urée.

11. Condensateur (1) selon l'une quelconque des revendications 4 à 10, dans lequel les chaînes principales de polyamide-imide sont partiellement aromatiques.

12. Condensateur (1) selon l'une quelconque des revendications 1 à 11, dans lequel le polyamide-imide comporte, en tant que groupes fonctionnels, des groupes phénylène, des anhydrides et/ou des groupes furane.

13. Condensateur (1) selon la revendication 8, dans lequel le polyamide-imide présente une structure répondant à la formule chimique 1, dans laquelle
- R¹ est un lactame, un anhydride, un pont uréthane ou un pont imide,
- R² est un groupe phénylène, et
- R³ est un furane, une amine, un anhydride, un pont uréthane ou un pont imide.

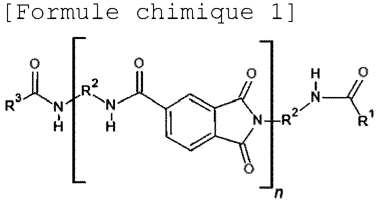

14. Condensateur (1) selon l'une quelconque des revendications 1 à 13, dans lequel une pluralité de premières couches d'électrodes (3) sont empilées en alternance avec des deuxièmes couches d'électrodes (4), et une couche diélectrique (2) est respectivement disposée entre deux couches d'électrodes (3, 4) voisines.

15. Condensateur (1) selon l'une quelconque des revendications 1 à 14, dans lequel les premières couches d'électrodes (3) sont toutes connectées de manière électriquement conductrice à un premier contact externe (5) et les deuxièmes couches d'électrodes (4) sont toutes connectées de manière électriquement conductrice à un deuxième contact externe (6).

16. Condensateur (1) selon l'une quelconque des revendications 1 à 15, dans lequel un substrat (7) est disposé sur une face latérale du condensateur qui est parallèle au plan des couches d'électrodes (3, 4).

17. Condensateur (1) selon l'une quelconque des revendications 14 à 16, dans lequel le condensateur (1) est un dispositif monté en surface (SMD).

18. Condensateur (1) selon l'une quelconque des revendications 14 à 16, dans lequel le condensateur comporte des fils (8, 9) pour un montage par insertion.

19. Condensateur (1) selon l'une quelconque des revendications 14 et 15, dans lequel le condensateur (1) est un condensateur bobiné.

20. Procédé de fabrication d'un condensateur (1), comprenant la fabrication d'une couche diélectrique uniforme (2) par
- l'application d'une solution de prépolymère de polyamide-imide sur une surface de dépôt,
- le séchage de la solution de prépolymère de polyamide-imide sur la surface de dépôt,
- le traitement thermique de la solution de prépolymère de polyamide-imide séchée.

21. Procédé de fabrication d'un condensateur (1) selon la revendication 20, dans lequel
- la surface de dépôt est une surface d'un substrat (7),
- la couche diélectrique (2), après sa fabrication, est détachée de la surface de dépôt pour produire un film diélectrique,
- le film diélectrique est métallisé,
- et le film diélectrique métallisé est enroulé.

22. Procédé de fabrication d'un condensateur (1) selon la revendication 20, dans lequel
- on utilise un substrat (7) électriquement conducteur ou un substrat (7) sur la surface duquel une première couche d'électrode (3) est produite,
- la surface de dépôt est la surface du substrat électriquement conducteur (7) ou de la première couche d'électrode (3),
- après l'application de la couche diélectrique (2) sur la surface de dépôt, une deuxième couche d'électrode (4) est produite sur la couche diélectrique (2), et
- une autre couche diélectrique (2) est produite sur la deuxième couche d'électrode (4) par
- l'application de la solution de prépolymère de polyamide-imide sur la deuxième couche d'électrode (4),
- le séchage de la solution de prépolymère de polyamide-imide sur la deuxième couche d'électrode (4),
- le traitement thermique de la solution de prépolymère de polyamide-imide séchée.

23. Procédé de fabrication d'un condensateur (1) selon l'une quelconque des revendications 20 à 22, dans lequel la solution de prépolymère de polyamide-imide contient des chaînes principales de polyamide-imide sur lesquelles des groupes isocyanate, des groupes lactame et/ou des groupes anhydride sont disposés sur des chaînes principales de polyamide-imide.

24. Procédé de fabrication d'un condensateur (1) selon la revendication 20, dans lequel les groupes isocyanate, les groupes lactame et/ou les groupes anhydride sont disposés de manière terminale sur des chaînes principales de polyamide-imide.

25. Procédé de fabrication d'un condensateur (1) selon l'une quelconque des revendications 20 à 24, dans lequel la solution de prépolymère de polyamide-imide est appliquée par enduction à la lame, enduction à la buse, impression au pochoir, enduction rotative ou enduction par pulvérisation.
